# EUROPÄISCHE PATENTSCHRIFT

(11) **EP 1 537 060 B1**
(45) Veröffentlichungstag und Bekanntmachung des Hinweises auf die Patenterteilung: **15.10.2008**
(21) Anmeldenummer: 02807705.5
(22) Anmeldetag: 30.08.2002
(51) Int. Cl.: C04B 35/622

(54) **KERAMISCHE HOHLFASERN HERGESTELLT AUS NANOSKALIGEN PULVERTEILCHEN**
CERAMIC HOLLOW FIBERS MADE FROM NANOSCALE POWDER PARTICLES
FIBRES CREUSES CERAMIQUES FABRIQUEES A PARTIR DE PARTICULES PULVERULENTES NANOSCALAIRES

(43) Veröffentlichungstag der Anmeldung: 08.06.2005
(73) Patentinhaber: ItN Nanovation AG, 66117 Saarbrücken (DE)
(72) Erfinder: NONNINGER, Ralph, 66117 Saarbrücken (DE)
(74) Vertreter: Kohler Schmid Möbus
(86) Internationale Anmeldenummer: PCT/EP2002/009698
(87) Internationale Veröffentlichungsnummer: WO 2004/020362

(56) Entgegenhaltungen:
- DE-A- 10 114 496

## Beschreibung

Die Erfindung betrifft ein Verfahren zur Herstellung einer keramischen Hohlfaser auf Basis nanoskaliger, anorganischer Oxidteilchen, bevorzugt Yttrium stabilisiertes Zirkonoxyd, Zirkonoxyd, Titandioxyd, Siliziumdioxyd und Aluminiumoxyd sowie die nach diesem Verfahren hergestellten, keramischen Hohlfasern.

Keramische Fasern gewinnen industriell mehr und mehr an Bedeutung, wobei insbesondere keramische Vollfasern aus Aluminiumoxyd bereits auf dem Markt verfügbar sind. So bieten die Firmen 3M, Mitsui, Sumitomo und Toyobo bereits keramische Endlosfasern aus Aluminiumoxyd in Preissegmenten zwischen 400 und 1800 US$/kg an. Industriell weniger bedeutend sind keramische Kurzfasern mit Längen im Bereich von 1 µm, aufgrund deren Lungengängigkeit, weswegen z.B. in Deutschland diese Fasern nicht mehr verarbeitet werden dürfen. Neue Entwicklungstrends ergeben sich in dem Bereich der keramischen Hohlfaser, da sich die keramische Hohlfaser prinzipiell in allen Bereichen, in denen Vollfasern etabliert sind, einsetzten lässt und zusätzlich weitere Marktsegmente erschließt.

Keramische Hohlfasern sind kommerziell noch nicht verfügbar, jedoch in vielen Forschungseinrichtungen Thema aktueller Entwicklungen. Im Vergleich zu Vollfasern besitzen Hohlfasern eine hohe Biegefestigkeit, einen hohen Isolationsfaktor und dies bei einem geringeren Materialeinsatz von ca. 40 bis 60 Gew.-%, womit auch eine Gewichtsersparnis bei gleichem Volumen einhergeht. Hinzu kommt, dass die Hohlfasern von innen kühlbar sind und z. B. Wärme, Inhaltsstoffe etc. sehr gut abtransportieren können.

Die wichtigsten Anwendungsfelder der keramischen Hohlfaser liegen in den Bereichen Metall- Polymer und Keramikmatrixarmierungen, künstliche Organe, Lichtleiterfasern, keramische Membrane, Feststoffelektrolyt für die Brennstoffzelle (SOFC), Tissue Engineering, Textilindustrie und der Herstellung extrem leichter, temperaturbelastender keramischer Bauteile z.B. Hitzeschilder oder Bremssysteme, die gezielt Wärme abführen können.

Im Gegensatz zu planaren Strukturen werden mit der Hohlfaser dreidimensionale und auch rotationssymmetrische Strukturen erzeugt, die auch einen flexiblen Einsatz in zahlreichen Anwendungen der Mikrosystemtechnik erlauben.

Für die Wirtschaftlichkeit der hier angesprochenen Anwendungen ist es entscheidend, dass die hergestellten Hohlfasern sich dicht packen lassen und damit ein hohes Oberflächen zu Volumenverhältnis garantieren. Idealerweise sind die Hohlfasern sehr klein und plastisch verformbar. Im Bereich der Brennstoffzelle z.B. würden große Außendurchmesser (im Bereich einiger mm) einer als Elektroylt nutzbaren Y-ZrO2 Hohlfaser zu hohen Kathodenwiderständen und zu geringen Leistungsdichten führen, im Bereich der Filtermembrane muss die pro Volumeneinheit zur Verfügung stehenden spezifischen Oberflächen sehr hoch sein, um auch große Filteranlagen wirtschaftlich noch realisieren zu können.

Es hat nicht an Versuchen gefehlt, Hohlfasern über ein Spinnen von Lösungen, Gelen oder Solen entsprechender Ausgangssubstanzen zu gewinnen, die dann in einem zweiten Schritt über diverse chemische Reaktionen und physikalische Prozesse zu keramischen Fasern umgewandelt werden. Beschränkt werden diese Verfahren dadurch, dass die notwendigen Ausgangssubstanzen nicht immer verfügbar sind, oder dass sich nicht jede gewünschte Phase durch pyrolytische Zersetzung und Phasenumwandlung herstellen lässt oder aber, dass beim Sintern der Hohlfaser (wenn man eine keramische Hohlfaser herstellen will, muss man die organischen Prozesshilfsmittel entfernen) der Schrumpf und die damit verbundenen Spannungen in der Hohlfaser so groß werden, dass die Hohlfaser zerbricht. Bisher scheint auf solchem Weg nur die Darstellung von SiO2 also Glashohlfasern in größeren Mengen gelungen zu sein (Frauenhofer Institut für Silicatforschung in Würzburg).

In DE 197 01 751 A1 wird auch die Darstellung einer Al2O3 Mikrohohlfaser beschrieben, die über Spinnen einer Aluminiumoxydvorstufe [Al2(OH)5Cl] gewonnen wurde, aber die angesprochenen Nachtteile des Verfahrens sind offensichtlich. Zum einen stehen nicht alle notwendigen Ausgangsmaterialien zur Verfügung, zum anderen ist der Anteil an organischer Bindephase in den Fasern so groß, dass ein Sintern der Hohlfasern zu defektfreien keramischen Fasern nicht möglich ist. In DE 197 01 751 A1 werden einzelne Fasern zum Sintern langsam auf 1600 °C aufgeheizt, eine Stunde gehalten und langsam wieder abgekühlt, Aussagen über die Defektfreiheit .der Fasern fehlen ebenso wie Bilder der gebrannten Faser. Das lediglich eine grüne Faser visuell festgehalten wurde, lässt die prozesstechnischen Schwierigkeiten dieses Verfahrens erahnen. Aus eigenen Erfahrungen ist zu berichten, dass die Herstellung defektfreier, keramischer Bauteile so nicht möglich ist. Eine Variante des Spinnverfahren wird von dem gleichen Autor in DE 19730996 A1 beschrieben, indem keine Lösung, Sol oder Gel, sondern eine keramische Schmelze versponnen wird. Hierbei wird ein keramisches Ausgangspulver (Al2O3 + Alumosilikat) bei 2300 °C durch die Düse eines Werkzeuges geführt und versponnen. Die Düse muss aus einem Material bestehen, das diese extrem hohen Temperaturen aushält (Tantal oder Wolfram), was den Rahmen standardmäßig verfügbarer Düsen weit sprengt. Diese Variante des Spinnprozesses stellt, sollte sie überhaupt händelbar sein, sicherlich keine wirtschaftliche Alternative zur Produktion von Hohlfasern dar.

Um dichte keramische Hohlfasern mit geringem Außen- und Innendurchmesser und mit jedem gewünschten Material wirtschaftlich realisieren zu können, gibt es zwei Möglichkeiten. Entweder man verwendet Templets (Platzhalter), die in einem zweiten Schritt entfernt werden und somit den Übergang Faser zu Hohlfaser bewirken oder aber man verwendet sehr kleinen keramischen Teilchen, die dann in üblichen keramischen Formgebungsverfahren wie der Elektrophorese, der Extrusion oder dem Foliengießen zu Hohlfasern verarbeitet werden. Je kleiner die eingesetzten Teilchen sind, um so kleiner werden die realisierten Fasern.

Will man hingegen poröse keramische Hohlfasern z.B. für die Filtration herstellen, so muss man, speziell wenn man in den Ultrafiltrationsbereich oder den Nanofiltrationsbereich vordringen will, entweder die gesamte Hohlfaser aus Nanoteilchen herstellen (nur so bekommt man in einem Sinterschritt die kleinen Poren) oder aber man muss eine Hohlfaser mit Schichtstruktur herstellen. Letzteres bedeutet einen grobporösen Träger mit einer dünnen Schicht aus Nanoteilchen zu überziehen. Kommerziell verfügbare Nanoteilchen hoher Qualität sind entweder amorph (SiO2) bzw. wie Böhmit (AIO(OH)), Vorstufen von echten Nanoteilchen (Aluminiumoxyd).

Beim Brennen eines Mehrschichtsystem bestehend aus einem porösen Träger und einer Schicht aus z.B. Böhmit wird sich die Schicht aus Nanoteilchen immer an der Grenzfläche zum grobporösen Träger ablösen, da die Temperaturbehandlung ein Nachkristallisieren der Nanoteilchen auslöst, damit einen starken Schrumpf und starke Spannungen auslöst, die ihrerseits das Bauteil zerstören. Da es kommerziell keine kristallinen Nanoteilchen hoher Qualität (auf Primärteilchengröße redispergierbar) gibt, wurde dieses Problem noch nicht gelöst.

Zusammengefasst bedeutet dies, dass sowohl die Darstellung von sehr kleinen Geometrien als auch die Darstellung von kleinen Poren für Filterelemente die Verarbeitung von sehr feinen Teilchen fordert. Geeignet ist hierbei bedingt der Einsatz von submikron-Teilchen und besonders geeignet der Einsatz von nanoskaligen, keramischen Teilchen mit Primärteilchengrößen bevorzugt kleiner 100 nm und besonders bevorzugt kleiner 20 nm. Für die Realisierung von Ultrafiltrations- und Nanofiltrationsmembrane oder die Herstellung von flexiblen, keramischen Fasern ist die Verwendung von Nanoteilchen unabdingbar.

Die Herstellung keramischer Hohlfasern über die Extrusion feiner Teilchen wird in WO 99/22852 beschrieben. Hier wird ein submikron α-Al2O3 Pulver eingesetzt, um Hohlfasern für den Filtrationsbereich zu gewinnen. Nach den Angaben der Autoren wird das Pulver mit handelsüblichen Bindern versetzt, extrudiert und bei 1300 °C gebrannt, wobei sich eine Porosität von 35 % einstellt. Die im Beispiel realisierte Hohlfaser hatte vor dem Sintern ein Außendurchmesser von 3 mm und ein Innerndurchmesser von 2 mm, nach dem Sintern war der Außendurchmesser auf 2,4 mm und der Innendurchmesser auf 1,6 mm geschrumpft. Die Hohlfaser besaß noch eine Porosität von 35 % und diente zur Realisierung von keramischen Filter. Der lineare Schrumpf betrug somit bei einem Pulver, mit einer mittleren spezifischen Oberfläche von 10 m²/g 20 %. Analog hierzu ist das US-Patent 5.707.584 der gleichen Autoren zu betrachten, wobei die Autoren in US 5.707.584 in ihren Ansprüchen versuchen, sich einen Außendurchmesser der Hohlfaser zw. 500 µm und 3 mm zu patentieren. Aus eigenen Erfahrungen kann gesagt werden, dass mit dem beschriebenen Verfahren Außendurchmesser von 500 µm nicht zu erzielen sind, ein Außendurchmesser von 1 mm erscheint als untere Grenze realistisch.

Weiterhin bleibt festzuhalten, dass die Ansprüche nur poröse Hohlfasern umfassen, die ausschließlich zur Filtration genutzt werden können.

In einem 1998 veröffentlichten Paper [Werkstoffwoche 1998, 12-15. Oct. 1998, München] beschreibt Gut et. al. (EMPA) seine Fortschritte bei der Produktion von Hohlfasern mittels Extrusion. So wird die Herstellung von keramischen Hohlfasern verschiedener Materialien im subµm-Bereich beschrieben, wobei der Außendurchmesser der extrudierten Hohlfasern 150 µm und der Innendurchmesser 90 µm betrug. Die Verwendung sehr feiner Düsen führte zu Verstopfungen des Mundstückes durch Agglomerate oder Überkörner. Ein weiteres Problem waren Entmischungen, die nach eigenen Angaben auftraten, wegen schlechter chemischer Abstimmung der Pulver/Binder Wechselwirkung. Auch wird die Darstellung dichtgesinterter Hohlfasern nur in einem Fall beschrieben, ansonsten gelang dies nicht, was lediglich für Anwendung in Filtersystemen ausreichend wäre.

Zusammengefasst kann festgehalten werden, dass die Darstellung keramischer Hohlfasern hohes industrielles Interesse genießt, wobei eine Miniaturisierung für viele Anwendungsfelder von Vorteil bzw. für viele Anwendungen entscheidend ist. Die Darstellung keramischer Hohlfasern setzt die Verfügbarkeit des für die Anwendung geeigneten Pulvers voraus, ebenso ein geeignetes Herstellungsverfahren und ein Sintern zu einem defektfreien Bauteil. Übliche Spinnverfahren ausgehend von Lösungen, Solen und Gelen kommen als Formgebungsverfahren für die keramische Hohlfaser nicht in Betracht, da sich die hier verwendeten Vorstufen mit dem hohem Bindergehalt nicht in keramische Hohlfasern sondern maximal, wie es die Frauenhofer Gesellschaft gezeigt hat, in glasartige Hohlfasern umwandeln lassen. Da Templet-Verfahren in diesen Größenbereichen noch nicht wirtschaftlich beherrschbar sind, bleiben als mögliche Fertigungsverfahren für Hohlfasern nur die klassischen keramischen Formgebungsverfahren wie Elektrophorese (Versuchsstadium), Foliengießen (dünne Folien müssten gerollt und verklebt werden) oder die Extrusion (liefert direkt die Röhrenform). Letzteres wurde auch bereits zur Realisierung von Hohlfasern bzw. kleinen keramischen Röhren genutzt, wobei hier eine Grenze bezüglich der Miniaturisierung erreicht wurde, die von der minimal zur Verfügung stehenden Teilchengrößen der eingesetzten Materialien abhängt. Die kleinsten, patentierten Hohlfasern haben Außendurchmesser oberhalb 500 µm, die kleinsten, literaturbekannten Hohlfasern besitzen einen Außendurchmesser von 150 µm und ein Lumen (Innendurchmesser) von 90 µm. Alle genannten Hohlfasern sind aus mikroskaligen Teilchen aufgebaut und üblicherweise porös, da ein Sintern nahe theoretischer Dichte aufgrund von prozesstechnischen Schwierigkeiten nicht gelang. Die Verarbeitung von Nanoteilchen zu keramischen Hohlfasern wurde noch nicht beschrieben und kann als neu angesehen werden.

Um defektfreie Hohlfasern für die Filtration im Ultrafiltrations- oder Nanofiltrationsbereich herzustellen, sind Porengrößen < 100 nm, bevorzugt < 50 nm und besonders bevorzugt < 10 nm nötig, die sich nur durch die Verwendung von Nanoteilchen ergeben. Ebenso lassen sich nur durch die Verarbeitung von Nanoteilchen miniaturisierte Hohlfasern mit Außendurchmessern < 500 µm, bevorzugt < 200 µm und besonders bevorzugt < 100 µm realisieren. Das einzige keramische Formgebungsverfahren, das direkt die tubulare Gestalt der Hohlfaser liefert ist die Extrusion. Für die Extrusion müssen keramische Massen aus Nanoteilchen entwickelt werden, deren Feststoffgehalt > 30 Vol.-%, besser > 35 Vol.-% ist, da sonst die Hohlfaser beim Brand starken Spannungen ausgesetzt ist und geschädigt werden kann. Damit der Prozess wirtschaftlich zu betreiben ist, sollte die Herstellung der keramischen Masse weiterhin mit üblichen keramischen Verarbeitungsaggregaten unter industriell üblichen Bedingungen erfolgen. Diese Forderungen, dass keramische Massen basierend auf Nanoteilchen mit hohen Füllgraden und mit üblichen Verarbeitungsaggregaten zu Hohlfasern verarbeitet werden, gehen weit über den Stand der Technik hinaus und wurden bisher noch nicht realisiert.

Die Schwierigkeit liegt in der Verarbeitung von Nanoteilchen begründet. Bei Teilchen mit ca. 10 nm Teilchengröße erhöht sich die spezifische Pulveroberfläche auf bis zu 250 m²/g. Damit verbunden muss der Anteil an organischen Bindern drastisch erhöht werden, da die große vorhanden Oberfläche organische Prozesshilfemittel bindet, die dann nicht mehr für die Einstellung der Rheologie zur Verfügung stehen. Dies wiederum führt zu sehr kleinen Feststoffgehalten in den z. B. zu extrudierenden Pasten wodurch der lineare Schrumpf ebenso wie die Spannungen im Bauteil beim Sintern so groß werden, dass alle keramischen Bauteile wie z.B. die Hohlfasern zerstört werden. In der Literatur werden deshalb nur wenige Hinweise überhaupt gefunden, für die Verarbeitung von Nanoteilchen zu keramischen Bauteilen, da immer die Schwierigkeit besteht, für das Sintern ausreichend hohe Feststoffgehalte zu realisieren. Während die Verarbeitung von Pulverteilchen über den Schlickerguß, die Elektrophorese und das Foliengießen oftmals auch mit niedrigen Feststoffgehalten möglich ist (verarbeitet werden Suspensionen) müssen für keramische Formgebungsverfahren wie Siebdruck, Spritzgießen und Extrusion keramische Pasten hergestellt werden, mit geeigneter Rheologie und mit hohen Feststoffgehalten von > 30 Vol.-%, bevorzugt aber > als 35 Vol.-%.

Die kleinsten Teilchengrößen, die literaturbekannt z.B. noch mittels Spritzguß verarbeitet wurden, haben eine Teilchengröße von 70 nm [Song and Evans J. Rheologie 40, 1996, 131 ff]. Unterhalb von 70 nm steigt die Primärteilchengröße drastisch an und kann bei Teilchen von 10 nm bis zu 250 m²/g betragen. Die dadurch erhöhten Wechselwirkungen zw. den Teilchen und den organischen Prozeßhilfsmitteln und die damit verbundene hohe Viskosität reduziert den Feststoffgehalt so drastisch, dass ein Spritzgießen dieser Teilchen nicht mehr möglich ist. Analog hierzu kann die Extrusion von Nanoteilchen gesehen werden, die ebenfalls nicht bekannt ist. Im Falle des Siebdruckes ist die Herstellung geeigneter Pasten auf Basis von Nanoteilchen sogar noch schwieriger, da bei der Extrusion und beim Spritzguß zur Dispergierung von Nanoteilchen, der Einsatz extrem hoher Scherkräfte über Knetaggregate prinzipiell möglich ist. Dies ist bei der Pastenherstellung für den Siebdruck nicht möglich, da die dort verwendeten organischen Prozesshilfsmittel üblicherweise nicht scherstabil sind. So beschreibt Kawahara et.al. [Key Engineering Materials Vol. 159-160, 1999, pp 175-180], die Situation im keramischen Siebdruck von Nanoteilchen wie folgt. Je größer die spezifische Oberfläche der Nanoteilchen ist, um so mehr organische Additive werden zur Einstellung der richtigen Pastenrheologie benötigt, da sonst die Viskosität der Paste so hoch wird, so dass sie nicht mehr zu verarbeiten ist. Da dann wiederum die Menge an organischen Prozesshilfsmitteln zu hoch ist, führt dies beim Ausbrennen der Organik zu Rissen und Defekten. Stand der Technik im Bereich des keramischen Siebdruckes mit Nanoteilchen sind z.B. Carolla et. al. [Adv. Mater. 1999, 11 No 11] die Versätze aus nanoskaligem Titandioxyd herstellen mit maximalen Füllstoffgehalten von 5,4 Vol.% (18,6 Gew.-%) oder Volkel et. al. [Symp. 7 Werkstoffwoche 1996 (1997) 601 ff] deren Versätze einen maximalen Füllstoffgehalt von 7,7 Vol.% besitzen. Das beste literaturbekannte Ergebnis für eine keramische Masse aus nanoskaligen Teilchen die mittels Siebdruck verarbeitet wurde lag bei einem Feststoffgehalt von 17 Vol.-% (55 Gew.-%). Mit all diesen Versätzen ist es unmöglich keramische Strukturen mittels Siebdruck zu fertigen.

Die Aufgabe der vorliegenden Erfindung bestand darin, einen keramischen Versatz auf Basis nanoskaliger Teilchen und ein Verfahren zu seiner Herstellung bereitzustellen, bei dem der Feststoffgehalt der Nanoteilchen, also der Pulvergehalt im Versatz, so hoch ist, dass er sich mittels keramischer Extrusion zu Hohlfasern verarbeiten lässt. So hergestellte Hohlfasern sollten nach der Extrusion Außendurchmesser < 500 µm bevorzugt aber < 200 µm und besonders bevorzugt < 100 µm besitzen und sich über einen nachgeschalteten Prozess in keramische Hohlfasern umwandeln lassen. Die so hergestellten Hohlfasern sollten je nach Anwendungsbereich porös oder zu nahezu theoretischer Dichte gesintert werden.

Diese Aufgabe wurde in überraschender Weise durch einen keramischen Versatz gelöst, umfassend mindestens ein keramisches Pulver mit einer Primärteilchengröße < 100 nm, bevorzugt < 50 nm sowie mindestens einem polymeren Binder und mindestens einer Oxycarbonsäure und mindestens einem Lösungsmittel.

Alternativ ist auch die Zugabe eines Opfermaterials zum Versatz möglich, um gezielt Porengrößen einzustellen.

Auf diese Weise gelingt es, ausreichend hohe Pulvergehalte im Versatz zu realisieren, so dass bei sehr kleinen nanoskaligen Pulvern eine keramische Formgebung über Extrusion überhaupt erst möglich wird. Durch die Verwendung der oberflächenaktiven Oxycarbonsäure lassen sich weiterhin sehr homogene Versätze realisieren, so dass literaturbekannte Probleme wie Entmischungen (siehe Gut et. al. (EMPA)) nicht auftraten. Dies hat eine enorm hohe Bedeutung für die darauf aufbauende Verfahrenstechnik und Produktenfinricklung. In besonders vorteilhafter Weise lassen sich die so hergestellten, extrudierten Hohlfasern bei deutlich niedrigeren Temperaturen in keramische Hohlfasern umwandeln, als im Stand der Technik bekannt. Im Vergleich zum Stand der Technik kann die Sintertemperatur um 100 bis 300 °C, je nach eingesetztem Material reduziert werden.

Überraschenderweise wurde auch gefunden, dass sich die für die Hohlfaserproduktion genutzten keramischen Pasten auch für den keramischen Siebdruck eignen.

Das eingesetzte keramische Pulver ist ein nanoskaliges, keramikbildendes Pulver. Dabei handelt es sich insbesondere um ein nanoskaliges Chalkogenid-, Carbid- oder Nitridpulver. Bei den Chalkogenidpulvern kann es sich um ein Oxid-, Sulfid-, Selenid- oder Telluridpulver handeln. Nanoskalige Oxidpulver sind bevorzugt. Es können alle Pulver eingesetzt werden, die üblicherweise für das Pulversintern verwendet werden. Beispiele sind (gegebenenfalls hydratisierte) Oxide wie ZnO, CeO2, SnO2, AI2O3, CdO, SiO2, Ti02, In2O3, ZrO2, Yttrium stabilisiertes ZrO2, Al2O3, La2O3, Fe2O3, Fe3O4, Cu2O, Ta2O5, Nb2O5, V2O5, MoO3, oder WO3, aber auch Phosphate, Silikate, Zirkonate, Aluminate und Stannate, Sulfide wie CdS, ZnS, PbS und Ag2S, Selenide wie GaSe, CdSe und ZnSe, Telluride wie ZnTe oder CdTe, Carbide wie WC, CdC2 oder SiC, Nitride wie BN, AIN, Si3N4 und Ti3N4, entsprechende Mischoxide wie Metall-Zinn-Oxide, z.B. Indium-Zinn-Oxid (ITO), Antimon-Zinn-Oxid, Fluor dotiertes Zinnoxid und Zn-dotiertes AI2O3, Leuchtpigmente mit Y- oder Eu-haltigen verbindungen, oder Mischoxide mit Perowskitstruktur wie BaTiO3, PbTiO3 und Bleizirkontitanat (PZT). Weiterhin können auch Mischungen der angegebenen Pulverteilchen eingesetzt werden.

Der erfindungsmäßige Versatz enthält bevorzugt nanoskalige Teilchen, bei denen es sich um ein Oxid, Oxidhydrat, Chalkogenid, Nitrid oder Carbid von Si, Al, B, Zn, Zr, Cd, Ti, Ce, Sn, In, La, Fe, Cu, Ta, Nb, V, Mo oder W, besonders bevorzugt von Si, Zr, Al, B, W, und Ti handelt. Besonders bevorzugt werden Oxide eingesetzt. Bevorzugte nanoskalige anorganische Feststoffteilchen sind Aluminiumoxid, Zirkonoxid, Titanoxid, Siliciumcarbid, Wolframcarbid und Siliciumnitrid.

Die im Versatz enthaltenen anorganischen Teilchen besitzen im allgemeinen eine durchschnittliche Primärteilchengröße im Bereich von 1 bis 300 nm oder 1 bis 100 nm, vorzugsweise 5 bis 50 nm und besonders bevorzugt 5 bis 20 nm. Die Primärteilchen können auch in agglomerierter Form vorliegen, bevorzugt liegen sie nicht agglomeriert bzw. im wesentlichen nicht agglomeriert vor.

Zum Zwecke der Formgebung wird das Ausgangspulver mit einem organischen Binder vermischt, der für die notwendige Plastifizierung der Mischung sorgt. Der erfindungsgemäße keramische Versatz enthält mindestens einem polymeren Binder und mindestens eine Oxycarbonsäure und mindestens ein Lösungsmittel.

Als polymeren Binder kann jedes thermoplastische Polymer verwendet werden, insbesondere solche, die für die Extrusion gebräuchlich sind. Beispiele für einsetzbare thermoplastische Polymere sind Polyolefine, wie Polyethylen, Dialkylphthalate (Dimethylphthalat, Diethylphthalat, Dipropylphthalat und Dibutylphthalat), Polypropylen und Poly-1-buten, Polymethyl-(meth)acrylat, Polyacrylnitril, Polystyrol und Polyvinylalkohol, Polyamide, Polyester, Polyacetate, Polycarbonate, lineare Polyurethane und entsprechende Copolymere, wie Ethylen-Vinylacetat (EVA)-Copolymere, sowie Biopolymere wie Cellulose, Methylcellulose, Ethylcellulose, Propylcellulose; Carboxy-modifizierte Cellulose, Ambergum u.a. wobei Polyacrylate, Polymethacrylate, Cellulose und Ambergum bevorzugt sind. Es kann ein thermoplastisches Polymer eingesetzt werden oder eine Mischung von zwei oder mehreren thermoplastischen Polymeren.

In einer besonderen Ausführungsform des Verfahrens werden als Polymerkomponente Acrylate und Methacrylate verwendet, die unter Verwendung eines Radikalstarters nach der Formgebung, mittels z.B. UV-Bestrahlung oder thermisch, vernetzt werden und so die innerhalb des erfindungsgemäßen Versatzes notwendige polymere Komponente erst aufbauen. Hier eignen sich alle im Handel befindlichen Acrylat und Methacrylatverbindungen, bevorzugt aber die von der BASF vertriebenen Lucirin Marken und die Laromer-Marken, wie LR8765, ES81, LR8713, LR8986, PE55F, PE56F, LR 8793, LR8846, LR 9004, LR8799, LR8800, LR8907, LR8981, LR8992, PE55W, LR8895, LR8949, LR8983, LR8739, LR8987, LR8748, LR8863, LR8945, LR8967, LR8982, LR8812, LR8894, LR8997, LR8864, LR8889, LR8869, LR8996, LR8946, LR8899, LR8985.

Als Radikalstarter können alle dem Fachmann bekannten Radialstarter genutzt werden. Dieses Verfahren eignet sich insbesondere, wenn als keramisches Formgebungsverfahren der Siebdruck eingesetzt wird und über eine Maskentechnik eine gezielte Strukturierung erzielt werden soll.

Um die erforderliche Kompatibilität zwischen den keramischen Teilchen und der polymeren Matrix herzustellen werden grenzflächenaktive Moleküle eingesetzt. Diese Moleküle müssen einen bifunktionellen Aufbau besitzen, so dass sich ein Teil des Moleküls an die Teilchenoberfläche anbinden lässt und ein anderer Teil des Moleküls die Kompatibilität zur Matrix realisiert. Hier eignen sich speziell bifunktionelle Moleküle aus der Klasse der Carbonsäuren, der Carbonsäureamide, der Carbonsäureester, der Carbonsäurechloride, der ß-Diketone, der Alkylsilane und insbesondere der Oxycarbonsäuren. In einer bevorzugten Ausführungsform des Verfahrens werden als Oxycarbonsäuren die Trioxadecansäure und die Dioctaheptansäure verwendet.

Als weitere Komponente des keramischen Versatzes enthält dieser ein organisches Lösungsmittel oder ein Gemisch von zwei oder mehreren organischen Lösungsmitteln, bevorzugt aus der Gruppe der Alkylenglykolen insbesondere Ethylenglycol, Propylenglykol, Diethylengykolmonobutylether, Diethylenglykolmonoallylether, Diethylenglykolmonohexyether, Diethylenglycolmonodecylether, Diethylenglyolmonoethylether und strukturell ähnliche Moleküle eingesetzt werden können. In einer bevorzugten Ausführungsform wird ein Alkoholgemisch aus Ethylenglykol und Diethylenglykolmonobutylether eingesetzt.

In einer besonders bevorzugten Ausführungsform wird als Lösungsmittel Wasser eingesetzt. Mit Wasser als Lösungsmittel gelingt die Extrusion der Nanoteilchen zu Hohlfasern, lediglich der Siebdruck als keramisches Formgebungsverfahren für die erfindungsgemäße keramische Masse kann mit Wasser als Lösungsmittel nicht betrieben werden. Hier ist das organische Lösungsmittel bzw. die Kombination mehrerer organischer Lösungsmittel aufgrund der Rheologie zwingend vorgegeben.

Die nanoskaligen Pulver werden mit dem Polymeren, der Oxacarbonsäure und dem Lösungsmittel bzw. Lösungsmittelgemisch in üblichen Misch- und Knetanlagen kompoundiert. Geeignete Vorrichtungen zum Compoundieren sind Kneter, Doppelschneckenextruder, Scherwalzenkompaktoren, Dreiwalzenstühle und Mörsermühlen. Der Misch- oder Knetprozeß wird so lange durchgeführt, bis eine homogene Mischung erreicht ist. Die geeigneten Parameter, wie Temperatur, erforderliche Scherwirkung u.a. zur optimalen Compoundierung sind dem Fachmann bekannt.

Nach gründlicher Durchmischung der obigen Komponenten kann ein Teil des Dispergiermediums (vorzugsweise im Vakuum) wieder entfernt werden, bis die keramische Masse den für das jeweilige Formgebungsverfahren, bevorzugt Extrusion gewünschten Feststoffgehalt aufweist. Bevorzugte Feststoffgehalte der keramischen Massen liegen bei mindestens 20 Vol.% und bevorzugt bei > 25 Vol.-% und besonders bevorzugt bei > 30 Vol.-%. In besonders vorteilhafter Weise lassen sich die so hergestellten Versätze auch als Siebdruckpasten einsetzen.

Nach der Formgebung kann der keramische Formkörper in herkömmlicher Weise getrocknet, entbindert und abschließend zum fertigen Sinterkörper weiterverarbeitet werden. Die in obiger Weise hergestellten, keramischen Körper, insbesondere die keramische Hohlfaser kann rissfrei getrocknet und gesintert werden.

Selbstverständlich lässt sich das Formgebungsverfahren auch so modifizieren, dass die Extrusionsmasse in ein Aufgabebehälter oder einen Druckbehälter einer Spinnvorrichtung, wie sie üblicherweise in der Textil- oder Chemie-Faserfilament-Produktion eingesetzt wird, gegeben und bei einer Temperatur zw. Raumtemperatur und 300 °C durch die Spinnvorrichtung gefördert wird. Zweckmäßigerweise kann die Spinnvorrichtung mit einer Vielzahl von Düsen ausgelegt werden, deren Düsen eine Öffnungsweite zwischen 1 und 500 µm bevorzugt zw. 30 und 100 µm besitzt.

Als Düsenmaterial lassen sich allem dem Fachmann bekannten Materialien nutzen, insbesondere Saphirdüsen und Düsen aus Edelstahl. Die Einzelfasern können direkt auf eine Spule mit stufenlos regulierbarer Rotationsgeschwindigkeit aufgewickelt werden.

Mit Hilfe der erfindungsgemäßen, keramischen Masse lassen sich Hohlfaser herstellen, die wiederum zur Herstellung von keramische Membrane mit Porengrößen zw. 0,5 nm und 1000 nm dienen, bevorzugt zwischen 0,5 nm und 200 nm und besonders bevorzugt zw. 1 nm und 100 nm. Um die gewünschte Porengröße in der Hohlfaser zu realisieren, kann die aus nanoskaligen Ausgangsmaterialien aufgebaute Hohlfaser bei der entsprechenden Temperatur gebrannt werden, oder aber die keramische Masse wird durch die Zugabe eines Opfermaterials erweitert. Das Opfermaterial ist eine aus Kohlenstoff aufgebaute organische oder anorganische Komponente und wird in Mengen zw. 5 und 20 Gew.-% zugesetzt.

Die folgenden Beispiele erläutert die Erfindung, ohne sie einzuschränken

### Beispiel 1

Die Verarbeitung von nanoskaligem Yttrium stabilisiertem Zirkonoxyd erfolgt in einem kommerziell verfügbaren Mischaggregat, wobei der Pulvergehalt auf 72 Gew.-% (31 Vol.%) eingestellt wird. Hierzu werden 300 g eines Lösungsmittelgemisch aus Ethylenklykol und Diethylenglykolmonobutylether im Verhältnis 1:1 vorgelegt. Zu dieser Mischung werden 700 g eines mit Dioctaheptansäure modifizierten, nanoskaligen Zirkonoxides gegeben. Nach weiterer Zugabe von 140 g eines acrylatbasierten Bindesystemes (Lacromer, BASF) sowie eines Radikalstarters wird die Mischung homogenisiert. Die so hergestellte Paste lässt sich über Siebdruck zu einer flächigen Schicht auf einem Keramik- oder einem Metallsubstrat verdrucken. Über eine Maskentechnik und die Belichtung mit UV-Strahlen lassen sich über Polymerisation extrem feine Strukturen realisieren. Die nicht polymerisierten Bereiche können mittels Waschen entfernt werden.

### Beispiel 2

Die Verarbeitung von nanoskaligem, Yttrium dotierten Zirkonoxyd über Extrusion erfolgt in einem kommerziell verfügbaren Mischaggregat, wobei der Pulvergehalt auf 72 Gew.-% (31 Vol.%) eingestellt wird. Hierzu werden 300 g eines Lösungsmittelgemisch aus Ethylenklykol und Diethylenglykolmonobutylether im Verhältnis 1:1 vorgelegt. Zu dieser Mischung werden 700 g eines mit Dioctaheptansäure modifizierten, nanoskaligen Zirkonoxides gegeben. Nach weiterer Zugabe von 140 g eines acrylatbasierten Bindesystemes (Lacromer, BASF) sowie eines Radikalstarters wird die Mischung homogenisiert. Die so hergestellte Paste lässt sich mittels Extrusion zu keramischen Hohlfasern weiterverarbeiten. Hierzu wird die keramische Masse durch eine Saphirdüse mit einem äußeren Düsendurchmesser von 100 µm und einem innen zentrierten Dorn gefördert. Insgesamt wurden 7 dieser Düsen in eine Stahlfassung eingelegt und bei Extrusionsdrücken zw. 10 und 30 MPa extrudiert. Die einzelnen Fasern wurden abschließend auf einer Spule mit stufenlos regulierbarer Rotationsgeschwindigkeit aufgenommen, wobei die Abzugsgeschwindigkeit bei fünf Meter pro Sekunde lag. Die Mikrohohlfaser besaß nach dem Vernetzen und Trocknen einen äußeren Durchmesser von 70 µm und einen Innendurchmesser von 50 µm. Aus dieser Endlosfaser wurden 20 cm lange Hohlfasern abgeschnitten, die entweder gestapelt oder untereinander verwebt wurden. Nach dem Entbindern der organischen Bestandteile und zweistündigem Sintern bei 1050 °C wurde eine keramische Hohlfaser bzw. ein Gewebe aus keramischen Hohlfasern erhalten. Die keramische Hohlfaser hatte einen Außendurchmesser von 56 µm und einen Innendurchmesser von 40 µm, bei einer Dichte von 97 % der theoretischen Dichte.

### Beispiel 3

Verfahren analog Beispiel 2, jedoch wurden zu dem Versatz 65 g einer, als Opfermaterials dienenden Aktivkohle hinzugegeben. Nach dem zweistündigen Sintern bei 1050 °C wurde eine poröse Hohlfaser erhalten. Die Porosität betrug 35 %, die mittlere Porengröße lag bei 5 nm.

### Beispiel 4

Die Verarbeitung von nanoskaligem Alluminumoxid über Extrusion erfolgt in einem kommerziell verfügbaren Mischaggregat, wobei der Pulvergehalt auf 71 Gew.-% (37 Vol.-%) eingestellt wird. Hierzu werden 300 g eines Lösungsmittelgemisch aus Ethylenklykol und Diethylenglykolmonobutylether im Verhältnis 1:1 vorgelegt. Zu dieser Mischung werden 700 g eines mit Trioxadecansäure modifizierten, nanoskaligen Zirkonoxides gegeben. Nach weiterer Zugabe von 140 g eines acrylatbasierten Bindesystemes (Lacromer, BASF) sowie eines Radikalstarters wird die Mischung homogenisiert. Die so hergestellte Paste lässt sich mittels Extrusion zu keramischen Hohlfasern weiterverarbeiten. Hierzu wird die keramische Masse durch eine Saphirdüse mit einem äußeren Düsendurchmesser von 100 µm und einem innen zentrierten Dorn gefördert, Insgesamt wurden 7 dieser Düsen in eine Stahlfassung eingelegt und bei Extrusionsdrücken zw. 10 und 30 MPa extrudiert. Die einzelnen Fasern wurden abschließend auf einer Spule mit stufenlos regulierbarer Rotationsgeschwindigkeit aufgenommen, wobei die Abzugsgeschwindigkeit bei fünf Meter pro Sekunde lag.

Die Mikroholfaser besaß nach dem Vernetzen und Trocknen einen äußeren

Durchmesser von 77 µm und einen Innendurchmesser von 59 µm. Aus dieser Endlosfaser wurden 20 cm lange Hohlfasern abgeschnitten, die entweder gestapelt oder untereinander verwebt wurden. Nach dem Entbindern der organischen Bestandteile und zweistündigem Sintern bei 1200 °C wurde eine keramische Hohlfaser bzw. ein Gewebe aus keramischen Hohlfasern erhalten. Die keramische Hohlfaser hatte einen Außendurchmesser von 60 µm und einen Innendurchmesser von 45 µm, bei einer Dichte von 98 % der theoretischen Dichte.

### Beispiel 5

Die Verarbeitung von nanoskaligem Zirkonoxyd über Extrusion erfolgt in einem kommerziell verfügbaren Mischaggregat, wobei der Pulvergehalt auf 72 Gew.-% (31 Vol.-%) eingestellt wird. Hierzu werden 300 g eines Lösungsmittelgemisch aus Ethylenklykol und Diethylenglykolmonobutylether im Verhältnis 1:1 vorgelegt. Zu dieser Mischung werden 700 g eines mit Dioctaheptansäure modifizierten, nanoskaligen Zirkonoxides gegeben. Nach weiterer Zugabe von 140 g eines acrylatbasierten Bindesystemes (Lacromer, BASF) sowie eines Radikalstarters wird die Mischung homogenisiert. Die so hergestellte Paste lässt sich mittels Extrusion zu keramischen Hohlfasern weiterverarbeiten. Hierzu wird die keramische Masse durch eine Saphirdüse mit einem äußeren Düsendurchmesser von 100 µm und einem innen zentrierten Dorn gefördert. Insgesamt wurden 7 dieser Düsen in eine Stahlfassung eingelegt und bei Extrusionsdrücken zw. 10 und 30 MPa extrudiert. Die einzelnen Fasern wurden abschließend auf einer Spule mit stufenlos regulierbarer Rotationsgeschwindigkeit aufgenommen, wobei die Abzugsgeschwindigkeit bei fünf Meter pro Sekunde lag.

Die Mikroholfaser besaß nach dem Vernetzen und Trocknen einen äußeren Durchmesser von 70 µm und einen Innendurchmesser von 50 µm. Aus dieser Endlosfaser wurden 20 cm lange Hohlfasern abgeschnitten, die entweder gestapelt oder untereinander verwebt wurden. Nach dem Entbindern der organischen Bestandteile und zweistündigem Sintern bei 950°C wurde eine poröse keramische Hohlfaser bzw. ein Gewebe aus porösen keramischen Hohlfasern erhalten. Die keramische Hohlfaser hatte einen Außendurchmesser von 60 µm, einen Innendurchmesser von 44 µm und eine Porosität von 37 %.

## Patentansprüche

1. Verfahren zur Herstellung von keramischen Hohlfasern aus nanoskaligen Pulvern, **dadurch gekennzeichnet, daß** man
a) eine keramische Masse herstellt, indem man ein nanoskaliges Metalloxid-, -carbid-, -nitrid- oder -sulfid-Pulver mit einer Oxycarbonsäure umsetzt, mit einer Mischung von mindestens einem Lösungsmittel und mindestens einem polymeren Binder zu einer keramischen Masse kompoundiert,
b) die keramische Masse zu Hohlfaserrohlingen extrudiert oder spinnt und
c) die Rohlinge nach üblichen Sinterverfahren sintert.

2. Verfahren nach Anspruch 1, **dadurch gekennzeichnet, daß** die keramische Masse einen Feststoffgehalt von mindestens 20 Vol.-%, vorzugsweise > 25 Vol.-% und insbesondere > 30 Vol.-% besitzt.

3. Verfahren nach Anspruch 1 oder 2, **dadurch gekennzeichnet, daß** das nanoskalige Pulver Aluminiumoxid, Zirkonoxid, Yttrium stabilisiertes Zirkonoxyd, Titanoxid, Siliciumcarbid, Wolframcarbid und/oder Siliciumnitrid ist.

4. Verfahren nach einem der Ansprüche 1 bis 3, **dadurch gekennzeichnet, daß** die eingesetzte Oxycarbonsäure bevorzugt Trioxadecansäure oder Dioctaheptansäure ist.

5. Verfahren nach einem der Ansprüche 1 bis 4, **dadurch gekennzeichnet, daß** das eingesetzte Lösungsmittel Wasser und/oder Ethylenglycol, Propylenglykol, Diethylenglykolmonoethylether, Diethylenglykolmonobutylether, insbesondere eine Mischung aus Ethylenglykol und Diethylenglykolmonobutylether umfaßt.

6. Verfahren nach einem der Ansprüche 1 bis 5, **dadurch gekennzeichnet, daß** man als polymeren Binder Cellulose, Methylcellulose, Ethylcellulose, Polyvinylalkohol, Ambergum, ein Polyacrylat und/oder ein Polymethacrylat einsetzt.

7. Verfahren nach einem der Ansprüche 1 bis 5, **dadurch gekennzeichnet, daß** man als polymeren Binder mindestens ein Acrylat und/oder Methacrylat einsetzt, das man unter Verwendung eines Radikalstarters nach der Formgebung polymerisiert.

8. Verfahren nach einem der Ansprüche 1 bis 7, **dadurch gekennzeichnet, daß** der Außendurchmesser der keramischen Hohlfaser < 500 µm, vorzugsweise < 200 µm und insbesondere < 100 µm beträgt.

9. Verfahren nach einem der Ansprüche 1 bis 8, **dadurch gekennzeichnet, daß** die Extrusionsmasse in einen Aufgabebehälter oder einen Druckbehälter einer üblichen Spinnvorrichtung gegeben und bei einer Temperatur zwischen Raumtemperatur und 300°C durch die Spinnvorrichtung gefördert wird.

10. Verfahren nach einem der Ansprüche 1 bis 9, **dadurch gekennzeichnet, daß** sich die Hohlfasern zu Dichten > 97 % der theoretischen Dichte sintern lassen.

11. Verfahren nach einem der Ansprüche 1 bis 10, **dadurch gekennzeichnet, daß** man poröse Hohlfasern herstellt, deren Porengröße in Abhängigkeit von den Bedingungen des Sinterns (Temperatur, Druck, Zeit, Atmosphäre) zwischen 0,5 nm und 1000 nm, vorzugsweise zwischen 0,5 nm und 200 nm und insbesondere zwischen 0,9 nm und 100 nm liegt.

12. Verfahren nach Anspruch 11, **dadurch gekennzeichnet, daß** man zur Erzeugung von porösen Hohlfasern zu der keramischen Masse Aktivkohle, vorzugsweise in einer Menge von 5 bis 20 Gew.%, als Templet zugibt.

13. Keramische Hohlfasern mit einem Außendurchmesser von < 500 µm, vorzugsweise < 200 µm und insbesondere < 100 µm, erhältlich durch das Verfahren nach einem der Ansprüche 1 bis 12.

14. Keramische Hohlfasern, **gekennzeichnet durch** einen Außendurchmesser von < 500 µm, vorzugsweise < 200 µm und insbesondere < 100 µm, enthaltend das Reaktionsprodukt aus einem nanoskaligen Metalloxid-, -carbid-, -nitrid- oder -sulfid-Pulver mit einer Oxycarbonsäure und mindestens einem polymeren Binder.

15. Verwendung der keramischen Masse nach Anspruch 1 zur Verformung mittels keramischem Siebdruck und, ggf. in Kombination mit einer geeigneten Maskentechnik, anschließendem Aushärten.

16. Verwendung der keramischen Hohlfasern nach Anspruch 13 oder 14 zur Herstellung eines Gewebes, daß sich formstabil sintern läßt.

17. Verwendung der keramischen Hohlfasern nach Anspruch 13 oder 14 für Metall-, Polymer- und Keramikmatrixarmierungen, für künstliche Organe, für Bauteile der Mikrosystemtechnik, für Lichtleiterfasern, für keramische Membrane, für den Feststoffelektrolyt in der Brennstoffzelle (SOFC), für Tissue Engineering und für die Herstellung extrem leichter, temperaturbelasteter keramischer Bauteile wie Hitzeschilder oder Bremssysteme.

18. Verwendung der keramischen Hohlfasern nach Anspruch 13 oder 14 zur Herstellung von keramischen Membranen oder zur Herstellung des Festkörperelektrolyten in der Hochtemperatur-Brennstoffzelle (SOFC).

19. Verwendung der mittels keramischem Siebdruck nach Anspruch 15 geformten Strukturen für Isolationsschichten, Funktionsschichten, Schutzschichten, für Sensoren, Aktoren und in elektronischen Bauteilen und Displays.

## Claims

1. A method for manufacturing ceramic hollow fibers from nanoscale powders, **characterized in that**
(a) a ceramic mass is manufactured, in which a nanoscale metal oxide, carbide, nitride or sulfide powder is transformed with an oxycarboxylic acid, compounded to a ceramic mass with a mixture of at least one solvent and at least one polymeric binder,
(b) the ceramic mass is extruded or spun to hollow fiber blanks, and
(c) the blanks are sintered according to conventional methods of sintering.

2. The method according to Claim 1, **characterized in that** the ceramic mass has a solids content of at least 20 vol%, preferably > 25 vol% and especially > 30 vol%.

3. The method according to Claim 1 or 2, **characterized in that** the nanoscale powder is aluminum oxide, zirconium oxide, yttrium stabilized zirconium oxide, titanium oxide, silicon carbide, tungsten carbide and/or silicon nitride.

4. The method according to anyone of Claims 1 through 3, **characterized in that** the oxycarboxylic acid is preferably trioxadecanoic acid or dioctaheptanoic acid.

5. The method according to anyone of Claims 1 through 4, **characterized in that** the solvent is water and/or ethyleneglycol, propyleneglycol, diethyleneglycolmonoethylether, diethyleneglycolmonobutylether, especially a mixture of ethyleneglycol and diethyleneglycolmonobutylether.

6. The method according to anyone of Claims 1 through 5, **characterized in that** as polymeric binder, cellulose, methylcellulose, ethylcellulose, polyvinylalcohol, ambergum, a polyacrylate and/or a polymethacrylate is utilized.

7. The method according to anyone of Claims 1 through 5, **characterized in that** as polymeric binder, at least an acrylate and/or methacrylate is utilized, which is polymerized after the shaping by using a radical starter.

8. The method according to anyone of Claims 1 through 7, **characterized in that** the external diameter of the ceramic hollow fiber is < 500 µm, preferably < 200 µm, and especially < 100 µm.

9. The method according to anyone of Claims 1 through 8, **characterized in that** the extrusion mass is placed in a feed container or in a pressure vessel of a conventional spinning device and conveyed through the spinning device between room temperature and 300 °C.

10. The method according to anyone of Claims 1 through 9, **characterized in that** the hollow fibers can be sintered to densities of > 97 % of the theoretical density.

11. The method according to anyone of Claims 1 through 10, **characterized in that** porous hollow fibers are manufactured whose pore size, in dependence on the sintering conditions (temperature, pressure, time, atmosphere), is between 0.5 nm and 1000 nm, preferably between 0.5 nm and 200 nm and especially between 0.9 nm and 100 nm.

12. The method according to Claim 11, **characterized in that** to produce porous hollow fibers, activated carbon is added to the ceramic mass, preferably in an amount from 5 to 20 wt% as a template.

13. Ceramic hollow fibers having an external diameter of < 500 µm, preferably < 200 µm and especially < 100 µm, obtainable through the method according to anyone of Claims 1 through 12.

14. Ceramic hollow fibers, **characterized by** an external diameter of < 500 µm, preferably < 200 µm, and especially < 100 µm, containing the reaction product from a nanoscale metal oxide, carbide, nitride or sulfide powder, with an oxycarboxylic acid and at least one polymeric binder.

15. Use of the ceramic mass according to Claim 1 for forming by means of ceramic silk screening and subsequent curing, if necessary in combination with a suitable masking technology.

16. Use of the ceramic hollow fibers according to Claim 13 or 14 for the manufacture of a web that retains its shape when sintered.

17. Use of the ceramic hollow fibers according to Claim 13 or 14 for metal, polymer and ceramic matrix reinforcements, for artificial organs, for components in microsystems engineering, for optical waveguides, for ceramic membranes, for the solid electrolyte in the fuel cell (SOFC), for tissue engineering and for the manufacture of extremely light weight, temperature-stressed ceramic components like heat shields or brake systems.

18. Use of the ceramic hollow fibers according to Claim 13 or 14 for the manufacture of ceramic membranes or for the manufacture of the solid electrolyte in the high temperature fuel cell (SOFC).

19. Use of the structures formed by means of ceramic silk screening according to Claim 15 for insulation coatings, functional coatings, protective coatings for sensors, actuators, and in electronic components and displays.

## Revendications

1. Procédé pour la préparation de fibres creuses céramiques à partir de poudres à l'échelle du nanomètre, **caractérisé en ce que**
a) on prépare une masse céramique **en ce que** l'on fait réagir une poudre d'oxyde, de carbure, de nitrure ou de sulfure de métal à l'échelle du nanomètre avec un acide oxycarboxylique, on combine avec un mélange d'au moins un solvant et d'au moins un liant polymère en une masse céramique,
b) on extrude ou on file la masse céramique en de petits tuyaux de fibres creuses et
c) on fritte les petits tuyaux selon un procédé de frittage classique.

2. Procédé selon la revendication 1, **caractérisé en ce que** la masse céramique présente une teneur en matières solides d'au moins 20 % en volume, de préférence > 25 % en volume et en particulier > 30 % en volume.

3. Procédé selon la revendication 1 ou 2, **caractérisé en ce que** la poudre à l'échelle du nanomètre est de l'oxyde d'aluminium, de l'oxyde de zirconium, de l'oxyde de zirconium yttrium-stabilisé, de l'oxyde de titane, du carbure de silicium, du carbure de tungstène et/ou du nitrure de silicium.

4. Procédé selon l'une quelconque des revendications 1 à 3, **caractérisé en ce que** l'acide oxycarboxylique utilisé est de préférence l'acide trioxadécanoïque ou l'acide dioctaheptanoïque.

5. Procédé selon l'une quelconque des revendications 1 à 4, **caractérisé en ce que** le solvant utilisé comprend de l'eau et/ou de l'éthylèneglycol, du propylèneglycol, du diéthylèneglycol monoéthyléther, du diéthylèneglycol monobutyléther, en particulier un mélange d'éthylèneglycol et de diéthylèneglycol monobutyléther.

6. Procédé selon l'une quelconque des revendications 1 à 5, **caractérisé en ce que** l'on utilise comme liant polymère de la cellulose, de la méthylcellulose, de l'éthylcellulose, du poly(alcool vinylique), de la gomme Amber, un polyacrylate et/ou un polyméthacrylate.

7. Procédé selon l'une quelconque des revendications 1 à 5, **caractérisé en ce que** l'on utilise comme liant polymère au moins un acrylate et/ou méthacrylate que l'on polymérise en utilisant un initiateur radicalaire après le façonnage.

8. Procédé selon l'une quelconque des revendications 1 à 7, **caractérisé en ce que** le diamètre extérieur des fibres creuses céramiques est < 500 µm, de préférence < 200 µm et en particulier < 100 µm.

9. Procédé selon l'une quelconque des revendications 1 à 8, **caractérisé en ce que** l'on introduit la masse d'extrusion dans un récipient d'alimentation ou dans un récipient sous pression d'un dispositif de filage classique et **en ce qu'**on la déplace à une température comprise entre la température ambiante et 300°C à travers le dispositif de filage.

10. Procédé selon l'une quelconque des revendications 1 à 9, **caractérisé en ce que** l'on fritte les fibres creuses jusqu'à des densités > 97 % de la densité théorique.

11. Procédé selon l'une quelconque des revendications 1 à 10, **caractérisé en ce que** l'on prépare des fibres creuses poreuses dont les tailles de pores sont selon les conditions du frittage (température, pression, durée, atmosphère) comprises entre 0,5 nm et 1 000 nm, de préférence entre 0,5 nm et 200 nm et encore mieux entre 0,9 nm et 100 nm.

12. Procédé selon la revendication 11, **caractérisé en ce que** l'on ajoute à la masse céramique pour la production de fibres creuses poreuses du charbon actif, de préférence dans une quantité de 5 à 20 % en poids comme gabarit.

13. Fibres creuses céramiques avec un diamètre externe < 500 µm, de préférence < 200 µm et en particulier < 100 µm obtenues par le procédé selon l'une quelconque des revendications 1 à 12.

14. Fibres creuses céramiques **caractérisées par** un diamètre externe < 500 µm, de préférence < 200 µm et en particulier < 100 µm contenant le produit de réaction d'une poudre d'oxyde, de carbure, de nitrure ou de sulfure de métal à l'échelle du nanomètre avec un acide oxycarboxylique et au moins un liant polymère.

15. Utilisation de la masse céramique selon la revendication 1 pour le façonnage au moyen d'une sérigraphie céramique et, éventuellement en combinaison avec une technique de masque appropriée, d'un durcissement subséquent.

16. Utilisation des fibres creuses céramiques selon la revendication 13 ou 14 pour la préparation d'un tissu qui se laisse fritter en restant stable en forme.

17. Utilisation des fibres creuses céramiques selon la revendication 13 ou 14 pour des armatures de matrices métalliques, polymères et céramiques destinées à des organes synthétiques, pour des pièces de construction de la technique des microsystèmes, pour des fibres conductrices de la lumière, pour des membranes céramiques, pour l'électrolyte de matière solide dans la cellule de combustion (SOFC), pour un Tissue Engineering et pour la préparation de pièces de construction céramiques extrêmement légères, résistantes à la température comme des écrans à la chaleur ou des systèmes de freinage.

18. Utilisation des fibres creuses céramiques selon la revendication 13 ou 14 pour la préparation de membranes céramiques ou pour la préparation de l'électrolyte de corps solide dans la cellule de combustion à température élevée (SOFC).

19. Utilisation des structures formées au moyen d'une sérigraphie céramique selon la revendication 15 pour des couches d'isolation, des couches de fonction, des couches de protection destinées aux capteurs, aux actionneurs et dans des pièces de construction électroniques et des affichages.
